# EUROPEAN PATENT APPLICATION

(11) **EP 4 570 533 A1**
(43) Date of publication of application: **18.06.2025**
(21) Application number: 24217137.9
(22) Date of filing: 03.12.2024
(51) Int. Cl.: B60C 23/00, B60C 23/04

(54) **WHEEL MONITORING SYSTEM AND METHOD**

(30) Priority: 12.12.2023 US 202363608863 P; 01.10.2024 US 202418903181
(71) Applicant: The Goodyear Tire & Rubber Company, Akron, OH 44316 (US)
(72) Inventor: ORLEWSKI, Piotr, 9021 Ettelbruck (LU); LIMA, Paulo, 63450 Hanau (DE); RODRIGUES MARQUES, Filipe, 9048 Ettelbruck (LU)
(74) Representative: Kutsch, Bernd

(57) **Abstract**

The invention is directed to a wheel monitoring system for a vehicle, comprising tags for wirelessly sending electromagnetic signals, wherein at least one of the tags is mounted separately from each wheel in a wheel well. The system further comprises tag readers for wirelessly receiving and reading electromagnetic signals. In particular, each of the wheels comprises one of the tag readers for receiving electromagnetic signals sent by one of the tags mounted in a wheel well. Furthermore, the invention is directed to a vehicle comprising a wheel monitoring system, wherein each tag of a plurality of tags comprises unique information identifying one or more of the tag and a mounting position of the tag. Moreover, the invention is directed to a method of locating mounting positions of wheels.

## Description

### Field of the Invention

The present invention is directed to a system for monitoring wheels of a vehicle, such as wheels of a driven vehicle and/or trailer. Furthermore, the present invention is directed to a method of monitoring wheels, particularly a method of locating mounting positions of wheels of a vehicle. In addition, the invention is directed to a vehicle, such as a driven vehicle and/or a trailer, comprising a system for monitoring and/or locating wheels of the vehicle.

### Background of the Invention

Various systems and methods for monitoring and/or locating wheels of vehicles have been suggested in the prior art. Many of those rely on sensors mounted to each of the vehicle wheels which send electromagnetic signals to a single vehicle receiving and/or processing unit which is stationarily mounted to the vehicle. This unit is typically adapted to estimate the position of different wheels, such as using directional antennas. However, in some cases, it is difficult to reliably determine exact positions of wheels based on the position signals transmitted by and received from the wheels. For instance, in some cases, robust constructions of vehicles may dampen signals, making the determination of wheel positions relatively inaccurate. Furthermore, some vehicles have dozens of wheels, e.g., as in the case of some large trucks with trailers. Even more, in such cases, multiple wheels may be mounted directly besides and/or behind one another, which may further impair successful signal transmission and/or identification.

In some other systems, a wheel comprises a transmitter unit which comprises previously stored information on the wheel's position. A potential drawback of such systems consists in that an inadvertent change of a wheel position, e.g., due to remounting, without appropriate reprogramming of the transmitter unit, results in an indication of a wrong mounting position, e.g., together with tire inflation pressure information not matching the actual mounting position.

Thus, while various systems and methods for monitoring and/or locating wheels have been developed over the past years, significant room for improvement remains.

### Summary of the Invention

The invention relates to a vehicle in accordance with claim 1, to a wheel monitoring system for a vehicle in accordance with claim 8, and to a method of locating mounting positions of wheels of a vehicle in accordance with claim 9.

Dependent claims refer to preferred embodiments of the invention.

A first preferred aspect of the present invention is directed to a wheel monitoring system in a vehicle having a plurality of wheels and a plurality of wheel wells, comprising i) a plurality of tags for wirelessly sending electromagnetic signals, wherein at least one tag of the plurality of tags is mounted, separated from each wheel, in each wheel well of the plurality of wheel wells, and ii) a plurality of tag readers for wirelessly receiving and reading electromagnetic signals, wherein each one of the wheels comprises one tag reader of the plurality of tag readers for receiving electromagnetic signals sent by one of the tags mounted in a wheel well in which the respective wheel is mounted.

In a second preferred aspect, the present invention is directed to a vehicle comprising a plurality of wheels and a wheel monitoring system. The wheel monitoring system comprises a plurality of tags mounted, separately from the wheels, to the vehicle and adapted to wirelessly transmit electromagnetic signals; and a plurality of tag readers wherein one tag reader of the plurality of tag readers is mounted to each of the plurality of wheels and is adapted to wirelessly receive electromagnetic signals. Each tag of the plurality of tags comprises unique information identifying one or more of i) the tag and ii) a mounting position of the tag, wherein the tag is adapted to wirelessly transmit this unique information. Each tag of the plurality of tags is mounted closer to one of the wheels than to any other of the wheels so that each tag of the plurality of tags is closest to only one of the wheels and a tag reader of the one of the wheels receives the unique information from the tag closest to the one of the wheels.

In a third preferred aspect, the invention is directed to a method of locating mounting positions of wheels of a vehicle, comprising the steps of providing a plurality of tag readers, wherein one tag reader of the plurality of tag readers is mounted to each of the wheels mounted to the vehicle; providing a plurality of tags, wherein each one of the plurality of tags is mounted, separately from the wheels, at one mounting position of the mounting positions of wheels; receiving with one of the tag readers, which is mounted to one of the wheels, information from one of the tags which is mounted closest to the one of the tag readers, wherein the information indicates one or more of the mounting position of the one of the tags and a unique identification of the one of the tags; and identifying a mounting position of the one of the wheels based on the information received from the one of the tags.

### Brief Description of the Drawings

The invention will be described by way of example and with reference to the accompanying drawings in which:
FIG. 1 is a schematic sideview of a truck with a trailer including a wheel monitoring system in accordance with an embodiment of the present invention;
FIG. 2 is a schematic transparent top view of an arrangement of tags and tag readers of the truck shown in Figure 1, still in accordance with an embodiment of the present invention;
FIG. 3 is a schematic diagram of a wheel monitoring system comprising a tire monitoring system and one tag in accordance with an embodiment of the present invention; and
FIG. 4 is a flowchart of a method of locating mounting positions of wheels of a vehicle in accordance with another embodiment of the present invention.

### Detailed Description of Preferred Embodiments of the Invention

In accordance with the first preferred aspect, the present invention is directed to the wheel monitoring system in a vehicle having a plurality of wheels and a plurality of wheel wells. For instance, the term vehicle includes a driven or powered vehicle, such as a truck or passenger car, but also includes a non-driven vehicle, such as a trailer. The system comprises i) a plurality of tags for wirelessly sending electromagnetic signals, wherein at least one tag of the plurality of tags is mounted, separated from each wheel, in each wheel well of the plurality of wheel wells, and ii) a plurality of tag readers for wirelessly receiving and reading electromagnetic signals. Each one of the wheels comprises one tag reader of the plurality of tag readers for receiving electromagnetic signals sent by one of the tags mounted in a wheel well in which the respective wheel is mounted.

Thus, in contrast to prior art systems, the present invention comprises tags mounted in or to wheel wells and corresponding tag readers mounted to the wheels. In particular, this arrangement is different from prior art systems, as those typically only comprise a receiver stationarily mounted in the vehicle and corresponding transmitters in the wheels. The present invention, according to the first aspect, tags the wheel wells and has a tag reader mounted to the wheels.

In one embodiment, the one of the tags is mounted to a non-rotatable member (of the vehicle and/or wheel well) in the wheel well in which the respective wheel is mounted. Thus, the tag is for example not attached to a rotating part in the wheel well such as not mounted to the wheel or a rotating axle. Preferably, the one of the tags is stationarily mounted. Stationary or stationarily mounted means herein provided at an essentially fixed position relative to a body of the vehicle and/or to the vehicle's frame.

In another preferred embodiment, the tag comprises one or more of a transceiver, a transponder, and a transmitter for sending the electromagnetic signals; and/or the tag reader comprises one or more of a transceiver, a transponder, and a receiver for receiving (the) electromagnetic signals.

In still another preferred embodiment, each tag comprises information indicating one or more of an individual mounting position of the tag and/or wheel, and a unique identifier of the tag. For example, the individual mounting position comprises an axle of the vehicle, a lateral side of the vehicle, and optionally an inboard or outboard mounting position (e.g., at an axle and lateral side, if multiple wheels are mounted or mountable laterally besides one another at one lateral side and axle of the vehicle). Each mounting position of a tag is preferably closest to one or only one of the wheels of the vehicle. In addition, or alternatively, the tag comprises a unique identifier which is, e.g., not indicating directly, or as such, its mounting position but is only provided one time in/for the vehicle. For instance, this unique identifier may be stored in a database and linked by such a database to an individual mounting position, such as one of those mentioned above. For example, one tag comprises the first unique identifier "1111111", and another tag comprises the second unique identifier "1111112". A database may associate/link the identifier "1111111" with a wheel position of a front axle, left side, and the unique identifier "1111112" with a wheel position of a first axle, right side. Alternatively, in another example, a first tag may send the information "front vehicle axle, right side" and a further tag may send the information "rear vehicle axle, right side, inboard mounting position" (e.g., as in case of twin wheels), thereby indicating and/or identifying individual mounting positions.

In still another preferred embodiment, the individual mounting position includes the (mounting) axle of the vehicle, the lateral (mounting) side of the vehicle, and optionally an inboard (mounting) position or an outboard (mounting) position.

In still another preferred embodiment, the individual mounting position of the tag corresponds to and/or provides an individual mounting position of the respective wheel, such as the wheel closest to the tag.

In still another preferred embodiment, the tag is one of an RFID (radio-frequency identification) tag, an LF (low frequency) tag (such as using signal frequencies within a range of 100 kHz to 200 kHz), an SAW (surface acoustic wave) tag, and an NFC (near field communication) tag.

In still another preferred embodiment, the tag is an RFID tag using frequencies within a range of 13 MHz to 16 MHz, and/or frequencies within a range of 800 MHz to 1000 MHz, such as 860 MHz to 940 MHz. If the RFID tag is an NFC tag, a used frequency is optionally within a range of 13 MHz to 14 MHz, such as about 13.56 MHz.

Suitable tags as such are for instance available from one of the companies NXP^{™} or STMicro^{™}. For instance, such tags may comprise coils, which optionally have diameters within a range of 1 mm to 40 mm.

In still another preferred embodiment, each of the wheels (or all wheels rotatably mounted to the vehicle) comprises a communication system which comprises one of the tag readers, and wherein the communication system is further adapted to wirelessly send information based on received electromagnetic signals of the one of the tags. In an example, the tag is adapted to send information including its individual mounting position and/or its unique identifier. The tag reader is adapted to receive such information and optionally send such information, such as to one or more of a vehicle communication system, a mobile device (e.g., a mobile phone, tablet, or laptop), and a remote server. Optionally, this information is sent together with further information about the wheel, or its tire, such as including one or more of tire inflation pressure, tire load, tire wear, and tire temperature. The terms send and transmit can be used interchangeably herein.

In still another preferred embodiment the communication system is further adapted to wirelessly send the information based on received electromagnetic signals of the one of the tags together with one or more of information on tire inflation pressure, information on tire load, information on tire wear, information on tire type (such as mentioned herein below), information on wheel type (such as including a rim size of the wheel), and information on tire temperature of the wheel, such as mounted closest to the one of the tags and/or mounted at the mounting position of the one of the tags.

In still another preferred embodiment, each of the wheels comprises a tire and a rim, wherein the tire optionally comprises a tire monitoring system comprising a tire pressure sensor and/or the communication system. Optionally, the tire monitoring system further comprises one or more acceleration sensors.

In still another preferred embodiment, the tire monitoring system further comprises one or more of a data storage, a processing unit, a temperature sensor, an electrical power source, a receiver, a transmitter, a transceiver, a transponder, and one or more acceleration sensors (such as for tread wear determination). Optionally, the tire monitoring system, particularly its communication system, may comprise the tag reader or components thereof.

In still another preferred embodiment, each wheel comprises a rim, a valve (or, in other words, a tire valve, and/or optionally having a valve stem), and a tire, and wherein the tag reader is mounted to one of the rim, the valve (such as to the valve stem), and the tire, preferably to the tire. Optionally, the tire is a pneumatic tire and the tag reader is preferably mounted at a position radially inside of the tread to an innerliner of the pneumatic tire, such as in a tire cavity of the tire. The tag reader is optionally comprised in a tire monitoring system and/or communication system mounted to one of the rim and the tire.

In still another preferred embodiment, the tag is mounted to one or more of a cladding (e.g., comprising polymer and/or metal material) in the wheel well, a metal wall of the wheel well, a wheel suspension member in the wheel well, a wheel hub, an axle sleeve in the wheel well, a cable in the wheel well, a hose in the wheel well, a brake member (such as a brake caliper) in the wheel well, a body part of the wheel well, a fender portion of the wheel well, and a wheel housing portion of the wheel well. In other words, the tag can optionally be mounted to one or more of the members of the vehicle and/or wheel well listed herein.

In still another preferred embodiment, at least one of the wheel wells comprises at least two wheels, and wherein the wheel well, comprising the at least two wheels, comprises at least two spatially separated tags. Optionally, said wheels are arranged beside each other with respect to an axial direction (in other words, in parallel to the axis of rotation of the wheels). Then, preferably, the tags are spatially separated along the axial direction. Alternatively, wheels are arranged behind each other, with regards to a driving direction of the vehicle. In this case, the tags are spatially separated along the driving direction. For instance, three wheels may be arranged behind one another, such as common for some trailer types. In another example, two first wheels may be arranged beside each other and two second wheels may be arranged beside each other and behind the two first wheels. Such a mounting configuration is, e.g., known for driving axles of some trucks.

In still another preferred embodiment, the at least two spatially separated tags are fixed to one or more non-rotatable members in the wheel well, preferably to one or more stationary members in the wheel well.

In still another preferred embodiment, one of the at least two spatially separated tags is closest to one of the at least two wheels or its tire and another one of the at least two spatially separated tags is closest to another one of the at least two wheels or its tire.

In still another preferred embodiment, the wheel monitoring system is a system for monitoring wheels (such as including tire pressure monitoring), and/or locating the wheels and/or locating positions of the wheels.

Optionally, the present invention is directed to said vehicle comprising the wheel monitoring system, and/or one or more of its embodiments.

In the second preferred aspect of the present invention, the invention is directed to a vehicle comprising a plurality of wheels and a wheel monitoring system. The wheel monitoring system comprises a plurality of tags mounted to the vehicle, separately from the wheels, and which are adapted to wirelessly transmit electromagnetic signals. Furthermore, the wheel monitoring system comprises a plurality of tag readers wherein one tag reader of the plurality of tag readers is mounted to each of the plurality of wheels and is adapted to wirelessly receive electromagnetic signals, and wherein each tag of the plurality of tags comprises unique information identifying one or more of i) the tag and ii) a mounting position of the tag, and is adapted to wirelessly transmit this unique information. Moreover, each tag of the plurality of tags is mounted closer to one of the wheels than to any other of the wheels so that each tag of the plurality of tags is closest to only one of the wheels and/or so that a tag reader of the one of the wheels receives the unique information from the tag closest to the one of the wheels.

Embodiments mentioned herein, such as in relation to other aspects of the invention, can also be combined with the second aspect.

In the third preferred aspect of the present invention, the method of locating mounting positions (or in other words, locations) of wheels of a vehicle comprises the steps of:
providing a plurality of tag readers, wherein one tag reader of the plurality of tag readers is mounted to each of the wheels mounted to the vehicle;
providing a plurality of tags, wherein each one of the plurality of tags is mounted, separately from the wheels, to the vehicle at one (or only one, or a unique) mounting position of the mounting positions of wheels;
receiving with one of the tag readers, which is mounted to one of the wheels, information from one of the tags, which is mounted closest to the one of the tag readers, wherein the information indicates (or, in other words, provides) one or more of the mounting position of the one of the tags and a unique identification of the one of the tags; and
identifying a mounting position, or location, of the one of the wheels based on the information received from the one of the tags.

Thus, the present method allows locating each wheel based on the information from a tag which is mounted at a mounting position or location of the respective wheel.

In one preferred embodiment, each one of the tag readers mounted to one of the wheels receives information from one of the tags mounted closest to the respective tag reader and/or receives information indicating one or more of the mounting position of the respective tag and a unique identification of the respective tag.

In another preferred embodiment, the method comprises the step of identifying mounting positions of all wheels based on information received from tags mounted to the vehicle at their respective mounting positions.

In still another preferred embodiment, the method comprises the step of attaching the tag reader to one or more of a rim and a tire of the respective wheel. Preferably, the tag reader is attached to the rim via a band circumferentially attached to the rim, and/or to an innerliner of the tire, such as bonded via an adhesive and/or cured to the innerliner.

In still another preferred embodiment, the method comprises the step of attaching at least one tag to/in one wheel well of the vehicle.

In still another preferred embodiment, the tag reader sends a request (for providing one or more of a mounting location and a unique identifier) to the one of the tags which responds to the tag reader upon the request by providing information indicating one or more of its mounting position and unique identifier.

In still another preferred embodiment, the one of the tags transmits information indicating one or more of its mounting position and unique identifier, e.g., periodically.

In still another preferred embodiment, the method further comprises the step of transmitting, from at least one wheel, tire status information of the wheel together with the mounting position identified and/or the unique identifier. Thus, such tire status information can be matched or associated with the mounting position (or location) identified. For instance, reliable information can be provided about the position of a tire condition, such as where a tire needs to be inflated. This is particularly helpful if a truck and/or a trailer has lots of tires, wherein some of those are not directly visible, such as in case of inboard twin tires. Alternatively, it is possible that the unique identifier is provided which is linked to the corresponding wheel mounting position with the help of a database and/or remotely from the wheel or tire.

In still another preferred embodiment, the tire status information comprises one or more of tire (inflation) pressure information, tire temperature information, tire load information, tire type information (such as including one or more of tire size, tire aspect ratio, tire load index, tire speed index, e.g., as also indicated on the tire's sidewall), tire footprint information, tire stiffness information, tire friction information, and tire tread wear information. For instance, one or more of tire load information, tire footprint information, tire stiffness information, tire friction information, and tire tread wear information are determinable by the use of one or more acceleration sensors, optionally using also one or more of tire pressure information, tire temperature information, and tire type information. Corresponding methods and/or algorithms for determining and/or estimating tire load information, tire footprint information, tire stiffness information, tire friction information, and tire tread wear information are known in the art as such. Tire friction information may optionally comprise road friction information.

In still another preferred embodiment, the vehicle comprises one or more of a driven (or, in other words, powered) vehicle and a non-driven vehicle. For instance, a vehicle comprises one of a truck with a trailer, a truck, a car, a trailer, and a bus.

In still another preferred embodiment, a distance between a wheel and a tag (closest to the wheel) is at most 1 m, preferably at most 0.8 m, or even more preferably at most 0.5 m. This distance is measured as the shortest straight distance between the tag and the wheel.

In still another preferred embodiment, a smallest distance between a tag reader of a wheel and a tag (closest to the wheel) is at most 1 m, preferably at most 0.8 m, or even more preferably at most 0.5 m. This distance is measured as the shortest straight distance between the tag and the tag reader. If the tag reader rotates with the wheel (e.g., being attached to the tire) so that the distance between tag and tag reader changes periodically, said smallest distance is measured when the tag reader is closest to the tag.

In still another preferred embodiment, the vehicle comprises from 6 to 36 wheels, preferably rotatable wheels, e.g., mounted to the vehicle to contact the road when driving.

In still another preferred embodiment, the vehicle comprises from 6 to 36 tag readers and/or tags.

In still another preferred embodiment, the vehicle is one of a bus, a truck, a (truck) trailer, and a truck with a trailer.

In still another preferred embodiment, the vehicle is a truck with a trailer comprising at least 10 wheels.

In still another preferred embodiment, the vehicle comprises at least 10 tags and/or 10 tag readers.

In still another preferred embodiment, the wheels are 22.5-inch wheels (or, in other words, rims and/or tires).

In still another preferred embodiment, the tag further comprises vehicle information, preferably unique vehicle information. Optionally, the vehicle information comprises one or more of vehicle type, vehicle brand, maximum speed of the vehicle, maximum weight of the vehicle, vehicle information number (also known as VIN), a unique identifier of the vehicle, vehicle owner, vehicle service company, tire service company for the vehicle, and vehicle operator. For instance, the tag and/or the tag reader contains a, preferably user-programmable, identification number for vehicle labelling or identification. Having such a feature included, a potential wheel-vehicle mismatch can be avoided.

In still another preferred embodiment, the tag is fixed by one or more of a screw connection, a pin connection, a rivet connection, an adhesive, an adhesive tape, a hook and loop connection, welding, soldering, and mechanical form fit.

In particular, the suggested tags can be easily and/or cost efficiently retrofit to a vehicle. This is not the case for many prior art systems.

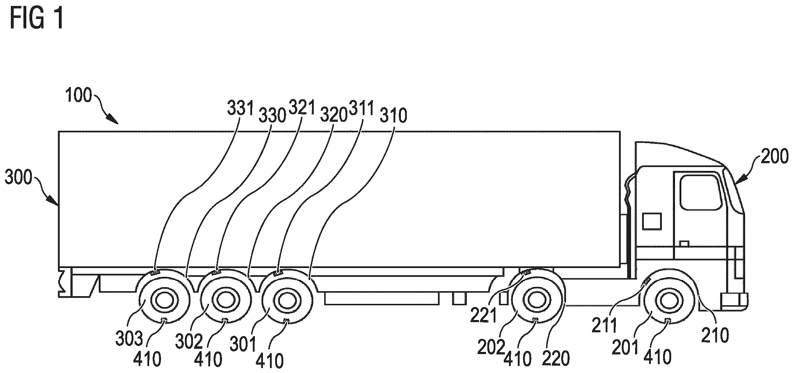

Figure 1 shows a schematic sideview of a vehicle 100 comprising of a truck 200 and a trailer 300 according to a preferred embodiment of the present invention. The truck 200 (or, in other words, tractor) comprises at a front steer axle a right wheel well 210 which comprises one wheel 201. Said wheel 201 comprises a tire carrying a tag reader 410. Furthermore, a tag 211 is stationarily mounted to the wheel well 210 closest to the tire 201 and at least partially covering the tire 201. At a rear axle, the truck 200 comprises four wheels of which in the present view one right outboard wheel 202 is shown, which comprises a tag reader 410. Moreover, the rear right wheel well 220 of the truck 200 comprises the tag 221 which is stationarily mounted in the rear right wheel well 220. The depicted trailer 300 comprises three axles arranged behind one another with respect to the driving and/or towing direction of the trailer 300. Each of the right wheels 301, 302, 303 visible in the drawing comprises one tag reader 410 (preferably mounted to an inner side of each respective tire of the wheels 301, 302, 303) and an associated tag 311, 321, 331 mounted to the trailer 300 separate from the wheels 301, 302, 303, wherein each of the tags 311, 321, 331 is closest to one of the wheels 301, 302, 303. In the present embodiment, tags are NFC tags. For instance, the schematically shown tags 311, 321, 331 may be read by a closest tag reader 410 upon rotation of tires, bringing tag readers periodically into a reading distance to read a respective tag mounted closest to the respective tag reader. For instance, such a reading distance is optionally up to 0.5 m, measured in a straight line between the tag and the tag reader. The tag 311, 321, 331 are mounted in the present non-limiting embodiment in one of the wheel wells 310, 320, 330. However, it is possible that a vehicle does not have wheel wells and/or wheel housings at all wheels. It is to be understood that the present invention is also suitable for such arrangements.

It is noted that the tag readers 410 may optionally be technically identical. However, each of the tags 211, 221, 311, 321, 331 comprises unique information comprising preferably information about the mounting location and/or information about the tag type. For instance, the tag 211 may comprise the information "tractor steer axle, right side wheel mounting position". The tag 221 may comprise the information "tractor drive axle, right side, outboard (or outer) wheel mounting position". Thus, a tag mounted in a wheel well informs the wheel mounted in this wheel well and/or its tag reader where the wheel and/or the tag reader is located or positioned, or, in other words, about its mounting position or location.

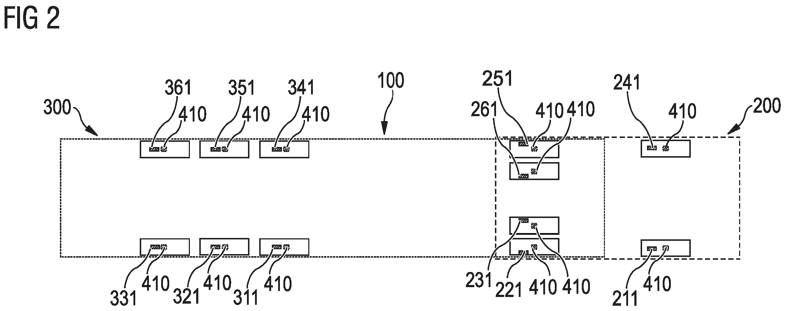

Figure 2 shows a schematic top view of the vehicle 100 already shown in Figure 1, by using the same reference signs, where appropriate. As visible in Figure 2, the truck 200 and trailer 300 comprise further wheels which are not visible in the previously mentioned sideview of Figure 1. Thus, the vehicle 100 has in total 12 tires, i.e. six in the truck 200 and six in the trailer 300. Each mounting position of each wheel comprises and/or is associated with one / a unique tag, i.e., 211, 221, 231, 311, 321, 331, 241, 251, 261, 341, 351, and 361. Each of these tags 211, 221, 231, 311, 321, 331, 241, 251, 261, 341, 351, and 361 is mounted closest to only one of the wheels of the vehicle 100. Moreover, each wheel, or more specifically, each tire of each wheel, carries one tag reader 410. As indicated, the tags at the rear or drive axle of the truck 200 are mounted such that they are closest to only one wheel and/or tag reader 410 of such a wheel so as to allow a unique identification of the mounting position of a wheel, via its tag reader 410 and the closest associated tag. For instance, the truck 200 comprises the tag 241 for indicating the individual wheel mounting position of the left side steer axle, and tag 211 for indicating the individual wheel mounting position of the right side steer axle. The tag 261 indicates the individual left side inboard drive axle wheel mounting position; tag 251 indicates the individual left side outboard drive axle wheel mounting position; tag 231 indicates the individual right side inboard drive axle wheel mounting position; and tag 221 indicates the individual right side outboard drive axle wheel mounting position.

The tags may be of a different technical type, or they may be of the same technical type but carry different information for identifying the individual mounting position and/or individually the tag.

In contrast to some prior art systems, the present embodiment allows detection of the actual position of a wheel and/or tag reader even if wheels have been mounted or remounted at inappropriate mounting positions.

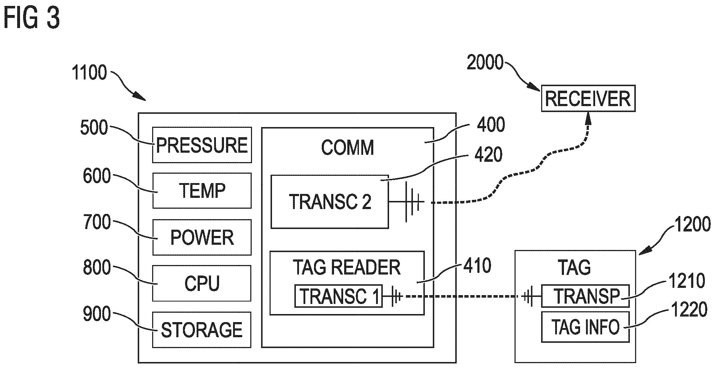

Figure 3 shows a schematic diagram of a wheel monitoring system comprising a tire monitoring system 1100 and a tag 1200. The tag 1200 may be used as one of the tags 211, 221, 231, 311, 321, 331, 241, 251, 261, 341, 351, and 361 of the previously mentioned embodiment. The tire monitoring system 1100 comprises, in the present non-limiting embodiment, a tire pressure sensor or tire pressure sensor unit 500, a temperature sensor 600, a power source 700 (such as a battery or an energy harvesting device), a CPU / processing unit 800, and a data storage 900. Furthermore, the tire monitoring system 1100 comprises a communication system 400 which comprises a transceiver 420 (optionally, it is possible that the communication system 400 comprises one or more separate receivers and transmitters) and a tag reader 410 (such as already mentioned with respect to the previously mentioned embodiment). The tag reader 410 comprises another transceiver for wirelessly communicating with the tag 1200. In particular, the tag 1200 preferably comprises a transponder 1210 which is adapted to wirelessly receive signals and/or information from the tag reader 410 and send a response to the transceiver of the tag reader 410. Furthermore, the tag 1200 comprises tag information stored in a tag info memory or storage 1220, such as including information about the tag's mounting position and/or a unique identifier of the tag.

In a preferred embodiment, the tag reader 410 requests information from the tag 1200 which responds by sending tag information to the tag reader 410. Based on the information received from the tag 1200, the communication system 400 can wirelessly send information including the mounting position of the tag (and thus of the tire and/or wheel comprising the tag reader 410 and/or the tire monitoring system 1100) together with further tire information such as pressure information detected by the pressure sensor 500 or temperature information detected by the temperature sensor 600, via its transceiver 420 to a remote receiver 2000. Such a receiver 2000, or recipient, may include one or more of a mobile communication device (such as a mobile phone, laptop, or tablet), a server, a cloud service, a vehicle computer, a tire service company, a vehicle service company, a vehicle owner, a vehicle operator, etc.).

Preferably, electromagnetic signal transmission between the communication system 400 and the receiver 2000 is based on one or more of RFID, wireless network, BlueTooth^{™}, or other wireless communication techniques.

The signal transmission between the tag reader 410 and the tag 1200 preferably involves one or more of the techniques already mentioned herein above in relation to optional tag types.

While the present embodiment shows, as an example, only one tire monitoring system and one tag, it is possible that a wheel monitoring system comprises multiple tire monitoring systems and/or tags, as already mentioned herein above. For instance, those may send information to one or more receivers, such as the receiver 2000.

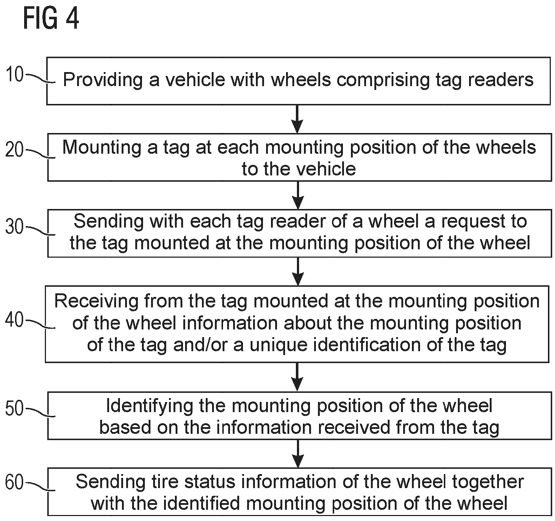

Figure 4 discloses one preferred method in accordance with an embodiment of the present invention. In step 10 of this method, a vehicle with wheels is provided, wherein each wheel comprises a tag reader. Preferably, such a tag reader is either mounted to the rim or to the tire of a wheel.

In step 20, a tag is attached to or mounted at each mounting position or location of the wheels to the vehicle. In other words, at each position or location, where a wheel is mounted to the vehicle, a tag is mounted to the vehicle, preferably in a wheel well, separate from the wheel.

According to step 30, each tag reader sends a request to a tag mounted at the mounting position of the wheel. Optionally, the tag reader as such does not know its mounting position before. While step 30, is a preferred option, it is not essential to the invention. For instance, the tag could periodically send information without said request.

In accordance with step 40, information about the mounting position and/or a unique identification of a tag mounted at the mounting position of the wheel is received (by the tag reader). Thus, in other words, the tag mounted at the mounting position of the wheel informs about its mounting position and/or its unique identifier (e.g., stored in a data storage of the tag).

In step 50, the mounting position of the wheel is identified (e.g., by the tire monitoring system, such as located in the wheel or tire cavity) based on the information received from the tag.

In step 60, tire status information of the wheel is sent together with the identified mounting position of the wheel. Thus, it is ensured that the tire status information, such as tire inflation pressure, is associated or combined with the correct wheel position. Hence, a receiver of such information can use the latter to take an action in relation to the wheel if necessary.

In another embodiment, as mentioned herein above, it is also possible that an identification step is carried out after sending tire status information together with a (unique) tag identifier to a receiver. Then such an identifier may be matched with or linked to the mounting position of the wheel and/or tag, e.g., using a database linking the identifiers to mounting positions.

All features and/or embodiments of the aforementioned aspects can be combined with one another.

## Claims

1. A vehicle having a plurality of wheels, a plurality of wheel wells and a wheel monitoring system, the wheel monitoring system comprising:
a plurality of tags for wirelessly sending electromagnetic signals, wherein at least one tag of the plurality of tags is mounted, separated from each wheel, in each wheel well of the plurality of wheel wells; and
a plurality of tag readers for wirelessly receiving and reading electromagnetic signals;
wherein each one of the wheels comprises one tag reader of the plurality of tag readers for receiving electromagnetic signals sent by one of the tags mounted in a wheel well in which the respective wheel is mounted.

2. The vehicle according to claim 1, wherein the one of the tags is mounted to a non-rotatable member in the wheel well in which the respective wheel is mounted; and/or wherein each tag or at least one of the tags comprises information indicating one or more of an individual mounting position of the tag, and a unique identifier of the tag.

3. The vehicle according to claim 1 or 2, wherein the tag comprises one or more of a transceiver, a transponder, and a transmitter for sending the electromagnetic signals, and wherein the tag reader comprises one or more of a transceiver, a transponder, and a receiver for receiving the electromagnetic signals; and/or wherein the tag or at least one of the tags is one of an RFID tag, an LF tag, an SAW tag, and an NFC tag.

4. The vehicle according to at least one of the previous claims, wherein each of the wheels comprises a communication system which comprises one of the tag readers, and wherein the communication system is further adapted to wirelessly send information based on received electromagnetic signals of the one of the tags.

5. The vehicle according to at least one of the previous claims, wherein each of the wheels comprises a tire and a rim, and wherein the tire comprises a tire monitoring system comprising a tire pressure sensor and the communication system; and/or wherein each wheel comprises a rim, a valve, and a tire, and wherein the tag reader is mounted to one of the rim, the valve, and the tire.

6. The vehicle according to at least one of the previous claims, wherein at least one of the wheel wells comprises at least two wheels, and wherein the wheel well comprising the at least two wheels comprises at least two spatially separated tags.

7. The vehicle according to at least one of the previous claims, wherein the at least two spatially separated tags are fixed to one or more non-rotatable members in the at least one wheel well; and/or wherein one of the at least two spatially separated tags is closest to one of the at least two wheels and another one of the at least two spatially separated tags is closest to another one of the at least two wheels.

8. A wheel monitoring system for a vehicle, the vehicle comprising a plurality of wheels, and the system comprising:
a plurality of tags mounted separately from the wheels to the vehicle and adapted to wirelessly transmit electromagnetic signals;
a plurality of tag readers wherein one tag reader of the plurality of tag readers is mounted to each of the plurality of wheels and is adapted to wirelessly receive electromagnetic signals;
wherein each tag of the plurality of tags comprises unique information identifying at least one of the tag and a mounting position of the tag, and wherein the tag is adapted to wirelessly transmit this unique information; and
wherein each tag of the plurality of tags is mounted closer to one of the wheels than to any other of the wheels so that each tag of the plurality of tags is closest to only one of the wheels and so that a tag reader of the one of the wheels receives the unique information from the tag closest to the one of the wheels.

9. A method of locating mounting positions of wheels of a vehicle, the method comprising the steps of:
providing a plurality of tag readers, wherein one tag reader of the plurality of tag readers is mounted to each of the wheels mounted to the vehicle;
providing a plurality of tags, wherein each one of the plurality of tags is mounted separately from the wheels to the vehicle at one mounting position of the mounting positions of wheels;
receiving with one of the tag readers, which is mounted to one of the wheels, information from one of the tags, which is mounted closest to the one of the tag readers, wherein the information indicates one or more of the mounting position of the one of the tags and a unique identification of the one of the tags; and
identifying a mounting position of the one of the wheels based on the information received from the one of the tags.

10. The method according to claim 9, wherein each one of the tag readers mounted to one of the wheels receives information from one of the tags mounted closest to the respective tag reader, which indicates one or more of the mounting position of the respective tag and a unique identification of the respective tag.

11. The method according to claim 9 or 10, wherein the method comprises the step of identifying mounting positions of all wheels based on information received from tags mounted to the vehicle at their respective mounting positions.

12. The method according to at least one of the claims 9 to 11, wherein the method comprises the step of attaching the tag reader to one or more of a rim and a tire of the respective wheel; and/or wherein the method comprises the step of attaching at least one tag in one wheel well of the vehicle.

13. The method according to at least one of the claims 9 to 12, wherein the tag reader sends a request to the one of the tags which responds to the tag reader upon the request by providing information indicating one or more of its mounting position and its unique identifier.

14. The method according to at least one of the claims 9 to 13, wherein the method further comprises the step of transmitting, from at least one wheel, tire status information of the at least one wheel together with an identified mounting position of the at least one wheel.

15. The method according to claim 14, wherein the tire status information comprises one or more of tire pressure information, tire temperature information, tire load information, tire type information, tire footprint information, tire stiffness information, tire friction information, and tire tread wear information.
